# FASCICULE DE BREVET EUROPEEN

(11) **EP 2 939 503 B1**
(45) Date de publication et mention de la délivrance du brevet: **27.01.2021**
(21) Numéro de dépôt: 13818293.6
(22) Date de dépôt: 11.12.2013
(51) Int. Cl.: H05B 47/10, H05B 47/19, H05B 47/20, H01M 10/44, H01M 10/48, H01M 10/42, H02J 7/35, H01M 10/46

(54) **PROCEDE DE PILOTAGE DYNAMIQUE D'UN EQUIPEMENT ELECTRIQUE**
VERFAHREN ZUR DYNAMISCHEN STEUERUNG EINES TEILS EINER ELEKTRISCHEN AUSRÜSTUNG
METHOD FOR DYNAMICALLY CONTROLLING A PIECE OF ELECTRICAL EQUIPMENT

(30) Priorité: 28.12.2012 FR 1262933
(43) Date de publication de la demande: 04.11.2015
(73) Titulaire: Sunna Design, 33290 Blanquefort (FR)
(72) Inventeur: BAILLOT, Raphael, F-33290 Saint-Savin (FR); SAMUEL, Thomas, F-33660 Porcheres (FR)
(74) Mandataire: IP Trust
(86) Numéro de dépôt international: PCT/FR2013/053028
(87) Numéro de publication internationale: WO 2014/102480

(56) Documents cités:
- WO-A2-2010/057138
- WO-A2-2010/057138
- WO-A2-2011/053408
- WO-A2-2011/095922
- US-A1- 2009 129 067
- US-A1- 2009 129 067
- US-A1- 2010 328 933

## Description

### Domaine de l'invention

La présente invention concerne le domaine de l'alimentation électrique d'équipements par une source d'énergie renouvelable et par un élément de stockage d'énergie.

Elle concerne notamment des équipements tels qu'un système d'éclairage LED solaire comprenant un module d'éclairage à LED, un panneau photovoltaïque, une batterie d'alimentation et un circuit électronique de gestion de l'énergie.

L'invention n'est toutefois pas limitée à l'éclairage, et s'applique également à d'autres équipements alimentés par une source d'énergie renouvelable et incorporant un moyen de stockage.

### Etat de la technique

On connaît dans l'état de la technique des solutions visant à optimiser le fonctionnement de tels équipements.

A titre d'exemple, le brevet français FR2922628 décrit un lampadaire comprenant un mât se fixant dans le sol, une lanterne fixée à l'extrémité libre du mât et comprenant un dispositif lumineux ainsi qu'un bloc d'alimentation électrique prévu pour alimenter en énergie électrique le dispositif lumineux. Le bloc d'alimentation comprend une batterie d'accumulation électrique, un ensemble de cellules photovoltaïques, une éolienne, et un circuit électrique d'accumulation prévu pour charger la batterie d'accumulation à partir de l'énergie électrique fournie par l'ensemble de cellules photovoltaïques et l'éolienne.

Le brevet américain US5151865 décrit un procédé de détermination de la valeur du contenu énergétique (EIW) d'une batterie en mesurant la tension aux bornes (U.sub.KL) d'un accumulateur d'énergie en prenant en compte au moins une valeur de référence (BW), calculée à partir d'une somme de courant (IE) s'écoulant dans l'accumulateur d'énergie dans une unité de temps spécifique (dt) et dans une plage de tension de fonctionnement spécifique (BSB). Cette valeur de référence (BW) représente de ce fait une valeur de fonction. La tension aux bornes de mesure (U.sub.KL) visée à la valeur de fonction (FW) correspond à une valeur du contenu énergétique spécifique (EIW) dans la gamme de teneur en énergie (BEI).

Le brevet américain US_6081104 décrit un système pour délivrer de l'énergie à une batterie et à une charge. La batterie peut être chargée par la source d'alimentation et utilisé pour fournir de l'énergie ou de la puissance à la charge lorsque la source d'alimentation est incapable de fournir suffisamment d'énergie et de puissance à la charge. Le système réduit le courant continu dans la charge et, par suite, prolonge la durée de fonctionnement de la charge, en particulier si la charge est un système d'éclairage. Le but de ce système est de prévenir un vieillissement prématuré de la charge d'éclairage ou de la batterie.

Le brevet américain US_6191568 décrit une solution de modulation de la tension de charge et la commande de puissance d'alimentation pour la fourniture d'énergie à une charge pour laquelle, au cours de certaines périodes de temps, généralement sur une base quotidienne, il est souhaitable de réduire la puissance. L'invention s'applique en particulier aux systèmes d'éclairage des rues dans lesquelles, pour une période de plusieurs heures pendant la nuit (lorsque le trafic est minime et beaucoup de gens sont endormis), les luminaires de l'éclairage peuvent fonctionner à puissance réduite.

La demande de brevet internationale WO2011/095922 décrit un procédé de contrôle du profil de puissance d'éclairage en fonction du besoin d'éclairage et de la capacité de la batterie, afin de préserver niveau de stockage supérieur à un niveau minimal prédéterminé, durant une période prédéterminée, consistant à prendre en compte des données de prévision météorologique acquises périodiquement par l'intermédiaire d'une connexion internet.

La demande wo2010057138 concerne un ou plusieurs luminaires d'extérieur capables de fonctionner indépendamment avec des processus de détection et de régulation basés principalement sur chaque mât, ou susceptible de communiquer en tant que parc de mâts en réseau où un mât / nœud maître / coordinateur émet des signaux du parc en réseau à une station de régulation et reçoit des signaux de la station de régulation adressés au parc en réseau, par téléphone et / ou par satellite. Les mâts indépendants et / ou le parc de mâts en réseau peuvent être adaptés en vue de processus d'économies d'énergie; de coopération avec le réseau public; de production et de stockage d'énergie renouvelable au moyen de panneaux solaires et de batteries associées; et / ou pour constituer des hot-spots Wi-Fi, des alarmes de sécurité publique, communiquer des informations ou assurer une analyse de données au public ou à des clients. Un système de régulation active pour économies d'énergie régule la charge des batteries et la distribution de l'énergie issue des panneaux solaires et / ou des batteries, de telle sorte que les batteries restent indemnes et que le ou les luminaires restent opérationnels même pendant l'hiver ou d'autres périodes prolongées de couverture nuageuse et de lumière diffuse. La régulation active de la distribution d'énergie par une fonction de régulation de la charge peut comprendre l'atténuation pendant la nuit, sauf lorsque des capteurs détectent un mouvement, et durant les périodes extrêmes de couverture nuageuse et de lumière diffuse, des incréments croissants d'atténuation et / ou de délestage pour préserver les batteries et la capacité opérationnelle.

La demande US2009129067 décrit un dispositif d'éclairage réglable à distance configuré selon un mode opérationnel personnalisé pour l'emplacement géographique du dispositif. Le dispositif d'éclairage est alimenté par une batterie dotée d'une charge solaire. Le dispositif d'éclairage, sous le contrôle d'un contrôleur intégré, est éteint et allumé pendant une période d'éclairage en fonction à la fois des heures locales de lever et de coucher du soleil déterminées par une combinaison d'informations d'heure et de date et de positionnement GPS. La luminosité du dispositif d'éclairage est contrôlée de manière autonome en fonction de la charge de la batterie et de la période d'éclairage requise déterminée. Le système de charge solaire est orienté par le contrôleur pour optimiser sa collecte d'énergie par des ajustements périodiques.

La demande US20100328933 décrit un système d'éclairage avec la capacité d'utiliser des sources d'énergie renouvelables telles que l'énergie solaire ou éolienne et la capacité d'auto-étalonnage par rapport à l'heure de la journée. Le système minimise également le nombre de composants de circuit requis, ce qui le rend de manière optimale peu coûteux et fiable.

La demande de brevet WO2011053408 décrit un système de stockage d'énergie capable de recevoir de l'énergie électrique d'une source d'énergie et peut fournir de l'énergie électrique à une première charge pendant une première période et à la première charge pendant une seconde période. La première charge diffère en taux d'utilisation de la première période par rapport à la deuxième période. Un contrôleur de système maintient le système de stockage d'énergie de telle sorte que le système de stockage d'énergie conserve une première quantité d'énergie électrique stockée pendant un premier mode, et une seconde quantité d'énergie électrique pendant un second mode. Le contrôleur de système maintient le système de stockage d'énergie dans le premier mode pendant une première partie de la première période, et dans le second mode pendant une seconde partie de la première période.

La demande de brevet US2009129067 décrit un dispositif d'éclairage réglable à distance configuré selon un mode opérationnel personnalisé pour l'emplacement géographique du dispositif. Le dispositif d'éclairage est alimenté par une batterie dotée d'une charge solaire. Le dispositif d'éclairage, sous le contrôle d'un contrôleur intégré, est éteint et allumé pendant une période d'éclairage en fonction à la fois des heures locales de lever et de coucher du soleil déterminées par une combinaison d'informations d'heure et de date et de positionnement GPS. La luminosité du dispositif d'éclairage est contrôlée de manière autonome en fonction de la charge de la batterie et de la période d'éclairage requise déterminée. Le système de charge solaire est orienté par le contrôleur pour optimiser sa collecte d'énergie par des ajustements périodiques.

### Inconvénients de l'art antérieur

Le principal inconvénient des solutions proposées dans l'art antérieur est que la garantie de permanence de fonctionnement impose de sur-dimensionner l'élément de stockage d'énergie et également la source d'énergie renouvelable dans la mesure où la consommation du système ne s'adapte pas à l'énergie disponible dudit élément de stockage d'énergie.

A défaut, si l'élément de stockage n'est pas surdimensionné, les conditions particulières rencontrées au cours de certains cycles de fonctionnement conduisent à une interruption intempestive du service assuré par l'équipement électrique.

Par ailleurs, la solution mettant en œuvre l'acquisition périodique de données de prévisions météorologiques nécessite une connexion à un serveur de données futures, et l'accès à des modèles de prévision pertinents par rapport à la localisation du système d'éclairage.

Ces données de prévision sont généralement macroscopiques, voire extrapolées, et couvrent des zones très supérieures à la zone d'implantation d'un luminaire.

Les solutions de l'art antérieur, telle que celle décrite dans le brevet WO2011/095922, apportent certes une réponse à l'objectif de permanence de service (« no black-out »), mais nécessitent l'accès à une infrastructure de données telle qu'une base de données météorologiques acquise par un serveur, empêchant la mise en œuvre dans des zones mal desservies par des liaisons radio-fréquences. De surcroît ces solutions nécessitent des moyens de radiocommunication consommateurs d'énergie, ce qui va à l'encontre de l'objectif d'optimisation de la consommation et de maximisation de la permanence de service avec des moyens de génération et de stockage d'énergie «frugaux».

### Solution apportée par l'invention

Afin de répondre aux inconvénients de l'art antérieur, la présente invention concerne, selon son acception la plus générale, un procédé conforme à la revendication 1, ainsi qu'un système conforme à la revendication 6.

On entend par « cycle de fonctionnement », la période temporelle pendant laquelle l'équipement est actif et fournit un service en étant principalement alimenté par l'élément de stockage. Le « cycle de fonctionnement » s'inscrit entre deux périodes pendant lesquelles l'équipement électrique est généralement (mais non nécessairement) inactif. Le « cycle de fonctionnement » n'intègre généralement (mais non nécessairement) pas les périodes pendant lesquelles l'élément de stockage est principalement rechargé par la source d'énergie renouvelable.

On entend par « capteur » au sens du présent brevet un composant mesurant directement un paramètre physique local, c'est-à-dire à proximité immédiate du système, sans recours à une transmission d'une information venant d'une source distante. En particulier, un récepteur recevant des informations météorologiques, un système de communication sans fil, ou un processeur associé à des moyens d'échange de type TCP/IP, WIFI, WIMAX, Bluetooth ou Internet ne constituent pas un capteur au sens du présent brevet.

Selon une première variante, la fonction d'ajustement prend en compte l'état dudit élément de stockage d'énergie.

Selon une deuxième variante, la fonction d'ajustement prend en compte au moins un facteur lié à la quantité réelle d'énergie reçue par ladite source d'énergie renouvelable.

De préférence, la fonction d'ajustement prend en compte un paramètre déterminé en fonction du nombre de cycles d'autonomie.

L'invention concerne également un système électrique comportant un élément de stockage d'énergie et une source d'énergie renouvelable ainsi qu'un circuit de gestion de l'énergie et de pilotage de l'alimentation d'un équipement électrique, caractérisé en ce que ledit circuit de pilotage commande la puissance d'alimentation dudit équipement selon une courbe temporelle de référence ajustable en fonction d'au moins un facteur externe et d'au moins un facteur interne, et de la contrainte selon laquelle l'intégrale sur le cycle de fonctionnement considéré de ladite courbe ajustée soit inférieure à la quantité d'énergie allouable dudit élément de stockage d'énergie, pendant le cycle de fonctionnement considéré.

Selon un mode de mise en oeuvre, ledit équipement électrique est un module d'alimentation d'éclairage à LED, ledit élément de stockage d'énergie est une batterie et ladite source d'énergie renouvelable comprend des cellules photovoltaïques.

Selon une première variante, le facteur externe est déterminé par une carte électronique de gestion de l'énergie comportant un capteur de température de ladite batterie ainsi qu'une jauge d'énergie.

Selon une deuxième variante, le facteur externe est déterminé par l'irradiance solaire dépendante de la position géographique du lieu d'implantation et de fonctionnement dudit système.

Selon une troisième variante, le facteur externe est déterminé par l'énergie accumulée depuis le cycle précédent.

L'invention concerne également un procédé de détection d'un ou plusieurs dysfonctionnements sur deux échelles :
▪ un système électrique selon l'invention
▪ une grappe d'équipements électriques selon l'invention.

Selon une variante, les dysfonctionnements sont identifiés par un, voire plusieurs indicateurs de défaillance issues de la réponse à une série de questions correspondantes à l'analyse des variations des paramètres électriques, optiques et/ou thermiques estimées au cours du fonctionnement dudit système électrique
De préférence, les indicateurs de défaillance sont définis par un système numérique binaire (0 : non ou 1 : oui)
Selon une autre variante, le procédé concerne une comparaison de l'état des équipements électriques de la grappe de systèmes électriques sur une échelle temporelle correspondante à la durée de vie de chaque équipement électrique
Selon une alternative, un dysfonctionnement majeur entraînant l'arrêt dudit (ou desdits) système(s) électrique(s) est communiqué par un pilotage en fréquence (de type flash) dudit équipement électrique incitant les riverains à communiquer un dysfonctionnement au service public concerné.

### Description d'un exemple non limitatif de réalisation

L'invention sera mieux comprise à la lecture de la description qui suit, concernant à un exemple non limitatif de réalisation se référant aux dessins annexés où :
- la figure 1 représente le schéma de principe d'un exemple d'application à un système d'éclairage LED autonome
- la figure 2 représente la courbe d'alimentation de référence
- la figure 3 représente une vue schématique d'une grappe de systèmes.

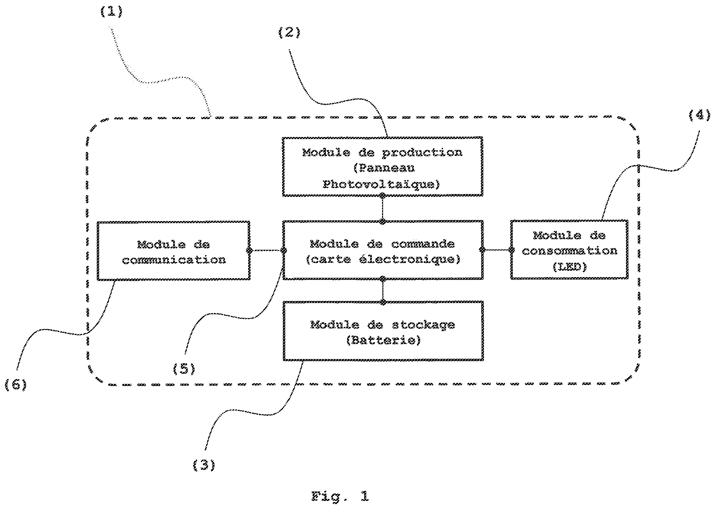

La figure 1 représente un schéma de principe d'une installation d'éclairage. Elle comprend un lampadaire (1) équipé d'un panneau photovoltaïque (2) et d'une batterie électrique (3) ainsi qu'un module LED (4).

L'ensemble de ces composants est commandé par une carte de gestion de l'énergie de type chargeur/déchargeur de batterie (« battery management system ») (5) pilotant l'alimentation (driver) du module LED (4).

Cette carte (5) contient un module de communication (6) permettant de recevoir des informations relatives à des facteurs externes et à transmettre des informations de service et d'état du système.

La carte (5) reçoit des informations provenant de capteurs tels qu'un capteur de température, une jauge d'énergie et d'un capteur de présence (7). Les données historiques fournies par ces capteurs sont enregistrées périodiquement dans une ou plusieurs tables, afin de permettre le calcul des courbes d'alimentation, et conserver un historique en vue d'un audit du fonctionnement.

Cette carte pilote le fonctionnement du système pour optimiser la courbe d'alimentation. Cette optimisation vise, conformément au but visé par l'invention, à adapter la puissance d'alimentation appliquée au module LED de façon à permettre un fonctionnement conforme au service attendu pendant tout le cycle de fonctionnement, quelque soient les conditions de recharge de la batterie avant le cycle de fonctionnement considéré.

La détermination du dimensionnement de la batterie se réalise par la méthodologie suivante :
La capacité nominale de la batterie est déterminée en fonction :
- de la plus longue durée d'un cycle de fonctionnement
- de l'énergie maximale (100%) consommée par l'équipement au cours du cycle de fonctionnement le plus long
- du rendement de la batterie. Ce rendement est d'environ 0,7 pour une batterie au plomb, de 0,8 pour une batterie NiMH, et de 0,9 pour une batterie Lithium.
- le rendement du système
- Cette valeur de référence est ensuite ajustée pour prendre en compte l'autonomie attendue. Cette autonomie sera déterminée sous la forme du nombre de cycles de fonctionnement pendant lequel l'équipement doit fonctionner de manière autonome.

On détermine ainsi une capacité nominale Cₙₒₘ de la batterie, qui serait suffisante pour assurer un fonctionnement continu à pleine puissance.

Dans l'état de l'art, l'homme du métier augmenterait la capacité réelle de la batterie en prenant en compte une marge de sécurité, pour assurer le fonctionnement y compris dans les cas les plus défavorables.

L'invention consiste à ne pas procéder ainsi, et à choisir une batterie dont la capacité est dimensionnée pour un cas favorable, soit légèrement inférieure à la capacité nominale Cₙₒₘ, et à moduler la puissance appliquée à l'équipement électrique selon une courbe calculée comme expliqué ci-après.

La première étape consiste à déterminer une courbe de référence correspondant à l'évolution temporelle de la puissance appliquée à l'équipement, pendant un cycle de référence. Cette courbe prend en compte les variations des besoins de service pendant le cycle de fonctionnement.

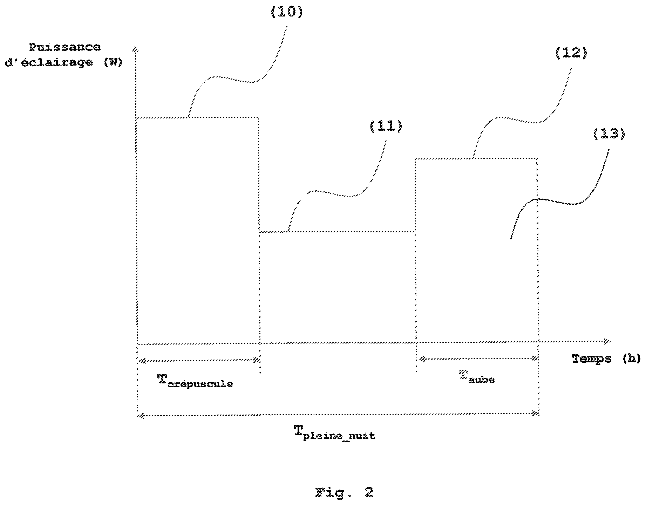

La figure 2 représente un exemple d'une telle courbe de référence, correspondant à la variation de la puissance d'éclairage d'un lampadaire public, en fonction d'un cycle de fonctionnement correspondant à la durée nocturne.

Pendant ce cycle, la courbe présente un premier niveau de puissance P₁ (10) pendant un intervalle de temps T_{crépuscule} correspondant aux périodes où la circulation potentielle justifie un éclairage maximum, adapté au besoin de sécurité de l'application.

Ensuite, un deuxième niveau de puissance P₂ (11) pendant un intervalle de temps T_{pleine_nuit} où la puissance peut êtret diminuée pour produire un éclairage de veille minimal, voire une puissance nulle.

Puis, la puissance est à nouveau fixée à un niveau de puissance P₃ (12) pendant un intervalle de temps T_{aube} correspondant à la levée du jour où les conditions opérationnelles (circulation, éclairage urbain, ...) justifient une puissance d'éclairage élevée.

Cette courbe est donnée à titre de simple exemple, étant entendu qu'elle peut prendre des configurations diverses, avec des variations continues par exemple.

L'intégrale (13) correspondant à la surface délimitée par la courbe, sur l'intervalle de temps correspondant à la durée du cycle, définie l'énergie consommée Eₙₒₘᵢₙₐₗₑ par l'équipement, dans les conditions théoriques nominales. La capacité de la batterie est déterminée pour être légèrement supérieure à cette énergie Eₙₒₘᵢₙₐₗₑ, sans dépasser 150% de cette énergie Eₙₒₘᵢₙₐₗₑ, et de préférence sans dépasser 110% de cette énergie Eₙₒₘᵢₙₐₗₑ

Cette courbe est ensuite ajustée par des facteurs extérieurs. Un premier facteur extérieur est le calendrier, définissant la durée du cycle en fonction de la variation de l'alternance jour/nuit.

Ce facteur peut provenir d'une horloge intégrée dans le circuit (5), ajustant la courbe en fonction du calendrier. Il peut aussi provenir d'une variation incrémentale en fonction d'une donnée acquise au cours d'un ou de plusieurs cycles antérieurs, par exemple le moment où l'irradiance solaire dépasse une valeur-seuil, visualisable par un ou plusieurs paramètre(s) interne(s) à la source d'énergie renouvelable.

Un autre facteur externe est la prévision d'irradiance, pouvant provenir d'une source distante communiquant avec le système par l'intermédiaire du moyen de communication (6). A cet effet, un serveur météorologique fournit avant un nouveau cycle une courbe prévisionnelle d'irradiance solaire.

Ce facteur externe peut également être calculé localement par un moyen de prédiction (analyse de tendance) prenant en compte les informations d'irradiance observées pendant un ou plusieurs cycles écoulés, pour déterminer par un traitement statistique une courbe pour le cycle à venir.

Ces facteurs sont pris en compte pour diminuer la puissance maximale prévue par la courbe de référence, lorsque les conditions ambiantes l'imposent.

Les facteurs internes sont par exemple une perte de performances de l'un des composants, notamment le rendement du module LED ou du module photovoltaïque. Ces facteurs sont pris en compte pour adapter la puissance d'éclairage prévue par la courbe de référence.

Les modifications sont contraintes par l'énergie disponible. L'application de la puissance maximale prévue par la courbe de référence sera conditionnée par la capacité effective de la batterie, et le cas échéant la courbe de référence sera recalculée pour prendre en compte une capacité inférieure à l'énergie Eₙₒᵣₙᵢₙₐₗₑ, et de la configuration de l'opérateur, qui pourra choisir de fixer une valeur minimale absolue de la puissance appliquée au module LED, ou arbitrer entre différentes configurations de la courbe de référence.

Le recalcule de la courbe en fonction de la capacité réelle de la batterie est effectuée en prenant en compte des paramètres internes, tels que :
- l'état d'énergie, de charge et/ou de santé de la batterie, au début du cycle, et éventuellement en cours de cycle
- les stratégies de protection et de gestion des défaillances sur un ou plusieurs cycles, conduisant à préserver une capacité seuil de stockage en fin de cycle pour ne pas dégrader la batterie (décharge trop profonde)
- le vieillissement du module LED et des cellules photovoltaïques et les rendements du système électrique.

Ce recalcule consistera à modifier la courbe à partir de la configuration déterminée lors de l'étape précédente, afin que l'intégrale de la courbe recalculée n'excède pas l'énergie réellement allouable par la batterie au début du cycle.

Dans le cas où ce recalcule ne permet pas de solution, le système déterminera une courbe minimale et déclenchera une alerte interne (voyants) ou externe (transmission de l'alerte à un serveur de supervision) et/ou signalant la situation sur le lampadaire concerné au moyen d'un clignotement du module LED.

### Analyse de tendance

Une variante de réalisation consiste à améliorer le paramétrage par une étape d'apprentissage.

A cet effet, on procède à l'enregistrement des données acquises par un ou plusieurs capteurs locaux, pendant une période correspondant à un ou plusieurs cycles de fonctionnement, pour construire un modèle local de variation des données considérées.

Ce modèle local est utilisé pour ajuster la courbe de référence à partir de ces données prédictives.

Un premier exemple de modèle est construit à partir d'un capteur de présence, enregistrées pendant un cycle de fonctionnement, afin de déterminer l'histogramme des passages. Pendant les périodes de passages fréquents, le niveau de puissance et/ou le temps d'éclairement sera augmenté par rapport à la courbe de référence. Au contraire, pendant les périodes d'absence de passages ou de passages peu fréquents, on réduira le niveau de puissance et/ou le temps d'éclairement par rapport à la courbe nominale, pour augmenter la réserve d'énergie disponible ultérieurement.

Un deuxième exemple de modèle prend en compte l'irradiance solaire mesurée à partir de la tension produite par les cellules photovoltaïques, représentative de l'irradiance solaire, afin de construire un modèle prédictif sur des périodes correspondant à plusieurs jours voire à plusieurs semaines.

Ce modèle sera ensuite complété de l'analyse du courant produit par les cellules photovoltaïques, représentatif de l'énergie accumulée dans la batterie, afin de construire un second modèle prédictif sur des périodes correspondant à plusieurs jours voire à plusieurs semaines.

La comparaison de ces deux modèles sera ensuite utilisée pour moduler la courbe de référence nominale du service d'éclairage.

Un autre modèle prédictif correspond au niveau de vieillissement d'un élément du système, notamment de la batterie. A cet effet, on procède périodiquement à un cycle de chargement-déchargement de la batterie pour enregistrer sa courbe de réponse. Ce modèle est ensuite corrigé en température et appliqué à la pondération de la courbe de référence nominale.

D'autres modèles peuvent être élaborés, par exemple en fonction de l'hygrométrie, de la pollution, etc.

### LED photo-capteur

Une variante pour la détection de l'irradiance solaire en vue de l'ajustement de la courbe de référence, ou la détection de l'alternance jour/nuit consiste à utiliser les LED en mode de photo-capteur. A cet effet, un circuit électronique alimente le module LED en inverse par méthode pulsée de manière à ne pas affecter le service d'éclairage. La mesure de la tension inverse aux bornes du module LED donne une information sur le niveau d'irradiance solaire permettant de calibrer le modèle de variation. Une table de référence enregistrée dans le circuit de commande électronique permet de corriger les mesures de tension inverse pour compenser les erreurs dues à la température et améliorer la précision sur l'estimation de l'irradiance solaire.

Cette information peut aussi être comparée à l'irradiance solaire estimée par le module photovoltaïque. La différence entre l'irradiance estimée par le module photovoltaïque et l'irradiance estimée à partir du module LED fournit une information sur le vieillissement du module photovoltaïque. En particulier, cette différence est mesurée lors d'une journée de forte irradiance (proche de 1000 watt par mètre carré), la référence étant fournie par le module LED moins assujetti à l'environnement opérationnel et ses effets limitatifs (poussière, accumulation de sable, pollution,...).

Cette information sera utilisée pour pondérée la courbe de référence nominale afin de tenir compte du vieillissement estimé du module photovoltaïque.

Cette mesure est particulièrement pertinente lorsque la journée de forte irradiance succède à une journée pluvieuse, détectée par un capteur d'humidité. Cette situation permet de prendre en compte le nettoyage du module photovoltaïque.

### Jauge d'énergie

Selon une variante, on estime périodiquement la quantité d'énergie allouable en fonction de la courbe nominale, le cas échéant pondérée par un ou plusieurs modèles locaux prédictifs. Lorsque la quantité d'énergie allouable est insuffisante pour assurer une permanence de service pendant un cycle de fonctionnement, le circuit électronique fournit un indicateur préventif, permettant d'avertir un opérateur, et de mettre le système en mode restreint n'assurant plus la fonction « no black-out ». Une partie de l'énergie allouable est alors affectée à l'alimentation d'un signal d'avertissement à basse consommation.

### Application à une grappe de systèmes

Les systèmes mettant en œuvre l'invention peuvent être interconnectés pour définir des stratégies d'optimisation prenant en compte non seulement le contexte local d'un système, mais aussi le contexte global d'une pluralité de systèmes.

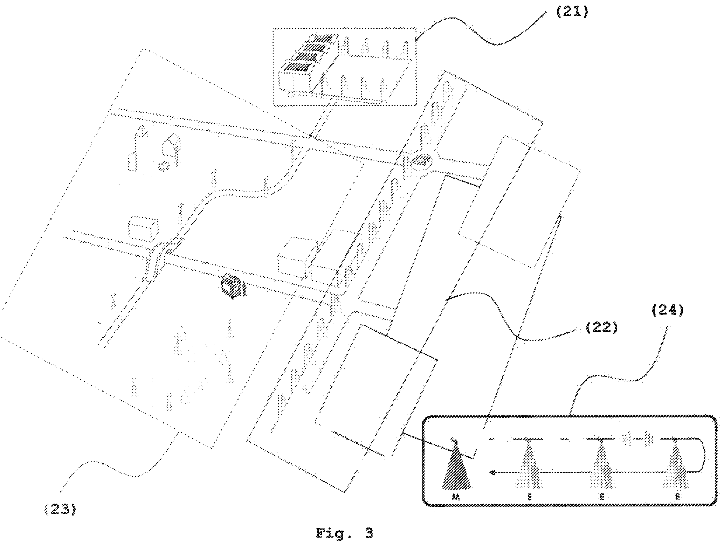

La figure 3 représente un exemple de grappe de systèmes selon l'invention.

Le site comprend un ou plusieurs systèmes conforme à l'invention (31, 32, 33) ainsi qu'une topologie maître-esclave (34).

Ces systèmes (31 à 34) communiquent entre eux par une liaison radio-fréquence pour échanger des informations sur l'état local de chaque système et pour synchroniser le programme d'éclairage.

## Revendications

1. Procédé de pilotage dynamique de l'alimentation d'un équipement électrique alimenté par une source d'énergie renouvelable (2) et un élément de stockage d'énergie (3) dont la capacité est dimensionnée légèrement inférieure à la capacité nominale de l'élément de stockage d'énergie, ladite capacité nominale étant déterminée en fonction
- de la plus longue durée d'un cycle de fonctionnement,
- de l'énergie maximale consommée par l'équipement au cours du cycle de fonctionnement le plus long,
- du rendement de la batterie,
- du rendement du système,
la puissance d'alimentation dudit équipement (4) étant variable temporellement selon une courbe temporelle de référence ajustable,
ledit procédé comportant des étapes d'ajustement en fonction d'au moins un facteur externe et d'au moins un facteur interne, et de la contrainte selon laquelle l'intégrale sur le cycle de fonctionnement considéré de ladite courbe ajustée soit inférieure à la quantité d'énergie allouable dudit élément de stockage d'énergie (3), pendant le cycle de fonctionnement considéré, lesdits facteurs externes étant des paramètres physiques acquis par des capteurs locaux, le recalcule de la courbe en fonction de la capacité réelle de la batterie en prenant en compte la santé de ladite batterie.

2. Procédé de pilotage dynamique de l'alimentation d'un équipement électrique selon la revendication 1 **caractérisé en ce que** la fonction d'ajustement prend en compte l'état dudit élément de stockage d'énergie.

3. Procédé de pilotage dynamique de l'alimentation d'un équipement électrique selon la revendication 1 **caractérisé en ce que** la fonction d'ajustement prend en compte au moins un facteur influé par l'efficacité de ladite source d'énergie renouvelable.

4. Procédé de pilotage dynamique de l'alimentation d'un équipement électrique selon la revendication 1 **caractérisé en ce que** la fonction d'ajustement prend en compte un paramètre déterminé en fonction du nombre de cycles d'autonomie.

5. Procédé de pilotage dynamique de l'alimentation d'un équipement électrique selon la revendication 1 **caractérisé en ce que** la fonction d'ajustement prend en compte au moins un facteur influé par l'efficacité de l'équipement électrique.

6. Système électrique comportant une source d'énergie renouvelable (2) et un élément de stockage d'énergie dont la capacité est dimensionnée légèrement inférieure à la capacité nominale de l'élément de stockage d'énergie, ladite capacité nominale étant déterminée en fonction ladite capacité nominale étant déterminée en fonction
- de la plus longue durée d'un cycle de fonctionnement,
- de l'énergie maximale consommée par l'équipement au cours du cycle de fonctionnement le plus long,
- du rendement de la batterie,
- du rendement du système,
la puissance d'alimentation dudit équipement (4) étant variable temporellement selon une courbe temporelle de référence ajustable,
ledit système comportant en outre un circuit de gestion de l'énergie
**caractérisé en ce que** ledit circuit commande des étapes d'ajustement en fonction d'au moins un facteur externe et d'au moins un facteur interne, et de la contrainte selon laquelle l'intégrale sur le cycle de fonctionnement considéré de ladite courbe ajustée soit inférieure à la quantité d'énergie allouable dudit élément de stockage d'énergie (3), pendant le cycle de fonctionnement considéré, lesdits facteurs externes étant des paramètres physiques acquis par des capteurs locaux, ainsi que le recalcule de la courbe en fonction de la capacité réelle de la batterie en prenant en compte la santé de ladite batterie.

7. Système électrique selon la revendication précédente **caractérisé en ce que** ledit équipement électrique est un module d'éclairage à LED, ledit élément de stockage d'énergie est une batterie et ladite source d'énergie renouvelable est composée de cellules photovoltaïques.

8. Système électrique selon la revendication précédente **caractérisé en ce que** le facteur interne est déterminé par une carte électronique de gestion de l'énergie et de pilotage de l'alimentation dudit équipement électrique comportant un capteur de température de ladite batterie, ainsi qu'une jauge d'énergie.

9. Système électrique selon la revendication 7 **caractérisé en ce que** le facteur externe est déterminé par la position géographique du lieu d'implantation et de fonctionnement dudit système.

10. Système électrique selon la revendication 7 **caractérisé en ce que** le facteur externe est déterminé par la quantité d'énergie accumulée depuis au moins un cycle précédent.

11. Grappe de systèmes électriques conformes à l'une au moins des revendications 6 à 10, comportant une grappe de sources de stockage d'énergie et une grappe de sources d'énergie renouvelable, un système de communication ainsi qu'un circuit de gestion de l'énergie et de pilotage de l'alimentation d'une grappe d'équipements électriques, **caractérisé en ce que** ledit circuit de pilotage commande la puissance d'alimentation dudit équipement selon une courbe temporelle de référence ajustable en fonction d'au moins un facteur externe et d'au moins un facteur interne, et de la contrainte selon laquelle l'intégrale sur le cycle de fonctionnement considéré de ladite courbe ajustée soit inférieure à la quantité d'énergie allouable dudit élément de stockage d'énergie, pendant le cycle de fonctionnement considéré.

12. Grappe de systèmes électriques selon la revendication 11 **caractérisé en ce que** le système de communication est défini par une liaison radio-fréquence pour échanger des informations sur l'état local de chaque système, détecter les défauts éventuels sur un ou plusieurs points lumineux, et pour synchroniser le programme d'éclairage.

13. Procédé de détection d'un ou plusieurs dysfonctionnements sur deux échelles :
▪ un système électrique selon la revendication 7
▪ une grappe d'équipements électriques selon la revendication 11

14. Procédé de détection d'un ou plusieurs dysfonctionnements selon la revendication 13 **caractérisé en ce que** les dysfonctionnements sont identifiés par au moins un indicateur de défaillance issu de la réponse à une série de questions correspondantes à l'analyse des variations des paramètres électriques, optiques et/ou thermiques estimées au cours du fonctionnement dudit système électrique

15. Procédé de détection d'un ou plusieurs dysfonctionnements selon la revendication 13 **caractérisé en ce que** les indicateurs de défaillance sont définis par un système numérique binaire, 0 : non ou 1 : oui.

16. Procédé de détection d'un ou plusieurs dysfonctionnements selon la revendication 13 **caractérisé en ce qu'**il concerne par une comparaison de l'état des équipements électriques de la grappe de systèmes électriques sur une échelle temporelle correspondante à la durée de vie de chaque équipement électrique

17. Procédé de détection d'un ou plusieurs dysfonctionnements selon la revendication 13 **caractérisé en ce qu'**un dysfonctionnement majeur entraînant l'arrêt dudit ou desdits systèmes électriques est communiqué par un pilotage en fréquence, de type flash, dudit équipement électrique incitant les riverains à communiquer un dysfonctionnement au service public concerné.

## Patentansprüche

1. Verfahren zur dynamischen Steuerung der Stromversorgung eines elektrischen Geräts, das von einer erneuerbaren Energiequelle (2) und einem Energiespeicherelement (3) gespeist wird, dessen Kapazität geringfügig unter der Nennkapazität des Energiespeicherelements liegt, wobei die Nennkapazität bestimmt wird in Abhängigkeit von
- der längsten Dauer eines Betriebszyklus,
- der maximalen Energie, die das Gerät während des längsten Betriebszyklus verbraucht,
- dem Batteriewirkungsgrad,
- dem Systemwirkungsgrad,
wobei die Versorgungsleistung des Geräts (4) gemäß einer einstellbaren Referenzzeitkurve zeitlich variabel ist, wobei das Verfahren Einstellschritte in Abhängigkeit von mindestens einem externen Faktor und mindestens einem internen Faktor und einer Randbedingung, nach der das Integral über den betrachteten Betriebszyklus der eingestellten Kurve kleiner ist als die Energiemenge, die von dem Energiespeicherelement (3) während des betrachteten Betriebszyklus zugeordnet werden kann, wobei die externen Faktoren physikalische Parameter sind, die von lokalen Sensoren erfasst werden, das Neuberechnen der Kurve in Abhängigkeit von der tatsächlichen Kapazität der Batterie unter Berücksichtigung des Gesundheitszustands der Batterie umfasst.

2. Verfahren zur dynamischen Steuerung der Stromversorgung eines elektrischen Geräts nach Anspruch 1, **dadurch gekennzeichnet, dass** die Einstellfunktion den Zustand des Energiespeicherelements berücksichtigt.

3. Verfahren zur dynamischen Steuerung der Stromversorgung eines elektrischen Geräts nach Anspruch 1, **dadurch gekennzeichnet, dass** die Einstellfunktion mindestens einen Faktor berücksichtigt, der von der Effizienz der erneuerbaren Energiequelle beeinflusst wird.

4. Verfahren zur dynamischen Steuerung der Stromversorgung eines elektrischen Geräts nach Anspruch 1, **dadurch gekennzeichnet, dass** die Einstellfunktion einen Parameter berücksichtigt, der in Abhängigkeit von der Anzahl von Autonomiezyklen bestimmt wird.

5. Verfahren zur dynamischen Steuerung der Stromversorgung eines elektrischen Geräts nach Anspruch 1, **dadurch gekennzeichnet, dass** die Einstellfunktion mindestens einen Faktor berücksichtigt, der von der Effizienz des elektrischen Geräts beeinflusst wird.

6. Elektrisches System, umfassend eine erneuerbare Energiequelle (2) und ein Energiespeicherelement, dessen Kapazität geringfügig unter der Nennkapazität des Energiespeicherelements liegt, wobei die Nennkapazität bestimmt wird in Abhängigkeit von
- der längsten Dauer eines Betriebszyklus,
- der maximalen Energie, die das Gerät während des längsten Betriebszyklus verbraucht,
- dem Batteriewirkungsgrad,
- dem Systemwirkungsgrad,
wobei die Versorgungsleistung des Geräts (4) gemäß einer einstellbaren Referenzzeitkurve zeitlich variabel ist, wobei das System ferner eine Schaltung zur Energieverwaltung umfasst, **dadurch gekennzeichnet, dass** dieses Schaltung Einstellschritte in Abhängigkeit von mindestens einem externen Faktor und mindestens einem internen Faktor und einer Randbedingung, nach der das Integral über den betrachteten Betriebszyklus der eingestellten Kurve kleiner ist als die Energiemenge, die von dem Energiespeicherelement (3) während des betrachteten Betriebszyklus zugeordnet werden kann, wobei die externen Faktoren physikalische Parameter sind, die von lokalen Sensoren erfasst werden, sowie die Neuberechnung der Kurve in Abhängigkeit von der tatsächlichen Kapazität der Batterie unter Berücksichtigung des Gesundheitszustands der Batterie steuert.

7. Elektrisches System nach dem vorhergehenden Anspruch, **dadurch gekennzeichnet, dass** das elektrische Gerät ein LED-Beleuchtungsmodul ist, das Energiespeicherelement eine Batterie ist und die erneuerbare Energiequelle aus Photovoltaikzellen besteht.

8. Elektrisches System nach dem vorhergehenden Anspruch, **dadurch gekennzeichnet, dass** der interne Faktor durch eine Elektronikkarte zum Verwalten der Energie und Steuern der Stromversorgung des elektrischen Geräts bestimmt wird, die einen Temperatursensor für die Batterie sowie ein Energiemessgerät umfasst.

9. Elektrisches System nach Anspruch 7, **dadurch gekennzeichnet, dass** der externe Faktor durch die geografische Lage des Installations- und Betriebsortes des Systems bestimmt wird.

10. Elektrisches System nach Anspruch 7, **dadurch gekennzeichnet, dass** der externe Faktor durch die seit mindestens einem vorhergehenden Zyklus akkumulierte Energiemenge bestimmt wird.

11. Cluster elektrischer Systeme nach mindestens einem der Ansprüche 6 bis 10, umfassend einen Cluster von Energiespeicherquellen und einen Cluster von erneuerbaren Energiequellen, ein Kommunikationssystem sowie eine Schaltung zur Energieverwaltung und der Steuerung der Stromversorgung eines Clusters elektrischer Geräte, **dadurch gekennzeichnet, dass** die Schaltung die Versorgungsleistung des Geräts gemäß einer Referenzzeitkurve steuert, die in Abhängigkeit von mindestens einem externen Faktor und mindestens einen internen Faktor und einer Randbedingung einstellbar ist, nach der das Integral über den betrachteten Betriebszyklus der eingestellten Kurve kleiner ist als die Energiemenge, die von dem Energiespeicherelement während des betrachteten Betriebszyklus zugeordnet werden kann.

12. Cluster elektrischer Systeme nach Anspruch 11, **dadurch gekennzeichnet, dass** das Kommunikationssystem durch eine Hochfrequenzverbindung zum Austausch von Informationen über den lokalen Zustand jedes Systems, zum Erfassen eventueller Fehler an einem oder mehreren Lichtpunkten und zum Synchronisieren des Beleuchtungsprogramms definiert ist.

13. Verfahren zum Erfassen einer oder mehrerer Fehlfunktionen auf zwei Skalen:
▪ einem elektrischen System nach Anspruch 7
▪ einem Cluster elektrischer Geräte nach Anspruch 11

14. Verfahren zum Erfassen einer oder mehrerer Fehlfunktionen gemäß Anspruch 13, **dadurch gekennzeichnet, dass** die Fehlfunktionen durch mindestens einen Störungsanzeiger identifiziert werden, der sich aus der Antwort auf eine Reihe von Fragen ergibt, die der Analyse der Variationen der elektrischen, optischen und/oder thermischen Parameter entsprechen, die während des Betriebs des elektrischen Systems geschätzt werden

15. Verfahren zum Erkennen einer oder mehrerer Fehlfunktionen gemäß Anspruch 13, **dadurch gekennzeichnet, dass** die Störungsanzeiger durch ein binäres IC-System definiert sind, 0: nein oder 1: ja.

16. Verfahren zum Erfassen einer oder mehrerer Fehlfunktionen gemäß Anspruch 13, **dadurch gekennzeichnet, dass** es einen Vergleich des Zustands der elektrischen Geräte des Clusters elektrischer Systeme auf einer Zeitskala betrifft, die der Lebensdauer jedes elektrischen Geräts entspricht.

17. Verfahren zum Erfassen einer oder mehrerer Fehlfunktionen gemäß Anspruch 13, **dadurch gekennzeichnet, dass** eine schwerwiegende Fehlfunktion, die das Abschalten des elektrischen Systems oder der elektrischen Systeme verursacht, durch eine Frequenzsteuerung vom Flash-Typ des elektrischen Geräts mitgeteilt wird, wodurch die Anwohner veranlasst werden, dem betreffenden öffentlichen Dienst eine Fehlfunktion mitzuteilen.

## Claims

1. Method for dynamically controlling the power supply to a piece of electrical equipment powered by a renewable energy source (2) and an energy storage element (3) of which the capacity is dimensioned so as to be slightly lower than the nominal capacity of the energy storage element, said nominal capacity being determined on the basis of
- the longest duration of an operating cycle,
- the maximum energy consumed by the equipment during the longest operating cycle,
- battery performance,
- system performance,
the supply of power to said equipment (4) being temporally variable according to an adjustable reference time curve,
said method comprising steps of adjustment on the basis of at least one external factor and at least one internal factor, and the constraint that the integral over the considered operating cycle of said adjusted curve is less than the amount of energy which can be allocated from said energy storage element (3) during the considered operating cycle, said external factors being physical parameters acquired by local sensors, the recalculation of the curve on the basis of the real capacity of the battery taking into account the health of said battery.

2. Method for dynamically controlling the power supply to a piece of electrical equipment according to claim 1, **characterized in that** the adjustment function takes into account the state of said energy storage element.

3. Method for dynamically controlling the power supply to a piece of electrical equipment according to claim 1, **characterized in that** the adjustment function takes into account at least one factor influenced by the efficiency of said renewable energy source.

4. Method for dynamically controlling the power supply to a piece of electrical equipment according to claim 1, **characterized in that** the adjustment function takes into account a parameter determined on the basis of the number of autonomy cycles.

5. Method for dynamically controlling the power supply to a piece of electrical equipment according to claim 1, **characterized in that** the adjustment function takes into account at least one factor influenced by the efficiency of the electrical equipment.

6. Electrical system comprising a renewable energy source (2) and an energy storage element of which the capacity is dimensioned so as to be slightly lower than the nominal capacity of the energy storage element, said nominal capacity being determined on the basis of
- the longest duration of an operating cycle,
- the maximum energy consumed by the equipment during the longest operating cycle,
- battery performance,
- system performance,
the supply of power to said equipment (4) being temporally variable according to an adjustable reference time curve,
said system further comprising an energy management circuit,
**characterized in that** said circuit controls steps of adjustment on the basis of at least one external factor and at least one internal factor, and the constraint that the integral over the considered operating cycle of said adjusted curve is less than the amount of energy which can be allocated from said energy storage element (3) during the considered operating cycle, said external factors being physical parameters acquired by local sensors, and the recalculation of the curve on the basis of the real capacity of the battery taking into account the health of said battery.

7. Electrical system according to the preceding claim, **characterized in that** said electrical equipment is an LED lighting module, said energy storage element is a battery and said renewable energy source is composed of photovoltaic cells.

8. Electrical system according to the preceding claim, **characterized in that** the internal factor is determined by an electronic card for managing the energy and controlling the power supply to said electrical equipment comprising a temperature sensor for said battery and an energy gage.

9. Electrical system according to claim 7, **characterized in that** the external factor is determined by the geographical position of the place of installation and of operation of said system.

10. Electrical system according to claim 7, **characterized in that** the external factor is determined by the amount of energy accumulated since at least one previous cycle.

11. Cluster of electrical systems according to at least one of claims 6 to 10, comprising a cluster of energy storage sources and a cluster of renewable energy sources, a communication system and an energy management and power supply control circuit of a cluster of pieces of electrical equipment, **characterized in that** said control circuit controls the supply of power to said equipment according to a reference time curve which can be adjusted on the basis of at least one external factor and at least one internal factor, and the constraint that the integral over the considered operating cycle of said adjusted curve is less than the amount of energy which can be allocated from said energy storage element during the considered operating cycle.

12. Cluster of electrical systems according to claim 11, **characterized in that** the communication system is defined by a radio-frequency link for exchanging information on the local state of each system, detecting potential faults on one or more light points, and synchronizing the lighting program.

13. Method for detecting one or more malfunctions on two scales:
▪ an electrical system according to claim 7
▪ a cluster of pieces of electrical equipment according to claim 11.

14. Method for detecting one or more malfunctions according to claim 13, **characterized in that** the malfunctions are identified by at least one failure indicator resulting from the response to a series of questions corresponding to the analysis of variations in the electrical, optical and/or thermal parameters estimated during the operation of said electrical system.

15. Method for detecting one or more malfunctions according to claim 13, **characterized in that** the failure indicators are defined by a binary IC system where 0:no or 1:yes.

16. Method for detecting one or more malfunctions according to claim 13, **characterized in that** it relates to a comparison of the state of the electrical equipment of the cluster of electrical systems on a time scale corresponding to the lifetime of each piece of electrical equipment.

17. Method for detecting one or more malfunctions according to claim 13, **characterized in that** a major malfunction causing the shutdown of said electrical system or systems is communicated by a flash-type frequency control of said electrical equipment encouraging residents to communicate a malfunction to the public service concerned.
